# EUROPEAN PATENT SPECIFICATION

(11) **EP 0 285 415 B1**
(45) Date of publication and mention of the grant of the patent: **10.02.1993**
(21) Application number: 88302882.1
(22) Date of filing: 30.03.1988
(51) Int. Cl.: C08F 10/06, C08F 2/00

(54) **Continuous process for producing polypropylene**
Kontinuierliches Verfahren zur Herstellung von Polypropylen
Procédé continu de préparation de polypropylène

(30) Priority: 01.04.1987 JP 80049/87; 08.04.1987 JP 86268/87
(43) Date of publication of application: 05.10.1988
(60) Divisional application: 91202644.0
(73) Proprietor: CHISSO CORPORATION, Osaka (JP)
(72) Inventor: Chiba, Hiromasa, Chibaken (JP); Oka, Takahiro, Ichiharashi, Chibaken (JP); Kawazoe, Shinji, Chibaken (JP)
(74) Representative: Lamb, John Baxter

(56) References cited:
- EP-A- 0 024 881
- EP-A- 0 057 352
- FR-A- 1 354 585

## Description

The present invention relates to a continuous process for producing polypropylene. More particularly, the present invention relates to the process for polypropylene having a wide molecular weight distribution and suitable for use in post-finishing sheets and blow moulding.

The invention further relates to a continuous process for producing ethylene/propylene copolymers.

Sheets produced by finishing and moulding known general-purpose polypropylenes suffer from various defects. Thus upon moulding for secondary finishing, rapid sagging of the sheets occurs, the range of finishing conditions is narrow and moulding efficiency is poor. In addition, in the case of wide sheets, sagging is a serious problem, the thickness of the post-finished articles tends to be non-uniform and wrinkles due to sags laid on one another tend to occur. Accordingly, only moulded articles of small size can be produced.

When finishing known general-purpose polypropylenes by blow moulding, the following problems may be encountered. Due to serious parison sagging upon moulding, the thickness of the moulded articles becomes non-uniform. Thus, blow moulding is applicable only to moulded articles of a small size. When polypropylene having a high molecular weight is used to prevent the above sagging, not only is there the possibility of giving poor fluidity to the melt, an increased load upon moulding or an increased energy loss and other mechanical troubles but marked chalking of the moulded articles may occur.

In order to mitigate the above problems, polypropylene, or low density polyethylene may be incorporated in the polypropylene, for example as proposed in JP-A-80614/72 and JP-A-8848/75. However, articles moulded from such mixtures tend to have chalk marks and, in order to prevent chalk marks, intense kneading is required upon melting and thus the use of these mixtures is restricted because of the need to select a kneader and the increased power consumption. In addition, the products obtained also generally suffer from a decrease in rigidity.

JP-A-91954/78, 185335/82, 187337/82 and 7439/83, each propose methods for kneading together polypropylenes having different moleclar weights, using a granulator. However, articles moulded from the resultant mixtures tend to give more serious chalk mark problems than do the polypropylene/low density polyethylene mixtures described above. The use of the mixture of polypropylene is thus restricted by the kneading process and choice of different molecular weight materials.

Further, in order to solve the problems involved in the formability of general-purpose polypropylenes, many proposals have been made for methods for broadening the molecular weight distribution of a polypropylene product by multiple polymerization, (see, for example, JP-A-185304/82, 190006/82, 7405/83, 7409/83 and 172507/84). According to examples of these specification polypropylene having different molecular weights is formed in multiple steps by batch polymerization in most o them. However, batch polymerization suffers from the defect that productivity per unit plant is low when considered as a commercial process.

In JP-A-185304/82 there is described continuous multistage polymerization and it is said that (a) when the order of stagewise production is from high molecular weight to low molecular weight material, the necessary difference in molecular weight can be achieved simply by adding hydrogen at a later stage of the multistage polymerization, so that such is a preferred process conversely, (b) when the order is from low molecular weight to high molecular weight material, unnecessary hydrogen must be removed from a vessel in which the polymerization mixture is retained, by lowering the pressure of by deaeration, prior to production of high molecular weight material and, therefore, process (b) is inferior to process (a). However, in duplicate investigations we have found that process (a) gives rise to the problem that the melt flow rate (MFR) of the high molecular weight portion can be measured only with difficulty or measurement is impossible when the MFR is low, resulting in difficulties in controlling the operation (it may be noted that it is possible to measure viscisity [η] but much time is required for this measurement so it is not a practical method for control of the operation). Furthermore, the polypropylene by process (a) shows an abnormally large difference between the MFR of the powders prior to granulation and that of the pellets obtained by granulation (the MFR value of the powders is low) and it has been noted that there are problems in controlling the difference in molecular weight at each step of the multiple polymerization and in controlling the MFR values of the products.

Crystalline polypropylene while it has excellent physical properties such as rigidity, heat resistance, etc. suffers from the disadvantage that the impact strength, in particular the impact strength at low temperatures, is low. Accordingly, the field of practical use has been limited. In order to overcome this defect, many proposals have been made for processes for block copolymerizing ethylene or other α-olefins (see, for example, JP-A-142652/75, 8094/77 and 34112/82). In these proposed processes, however, after a first polymerization of propylene as the major component has been performed, hydrogen is removed and a second polymerization of monomers containing a relatively large amount of ethylene is performed, whereby some measures are elaborated to broaden the molecular weight distribution.

In general, when adopting multiple continuous polymerization for a block copolymerization, some distribution (considered to be close to a full mixing tank distribution) in residence time of each catalyst particle in each step occurs so that the product becomes an aggregate of polymer particles in which the proportions of the polypropylene and polyethylene contents (note: a portion containing ethylene in a relatively large amount) vary with time and, as a result of this heterogeneity, give rise to quality defects.

Particularly in the continuous process for producing copolymers according to the invention (described below in detail) a molecular weight difference is given in each stage in step (i) of the multiple polymerization of propylene as the major component so that when the prior art technique is adopted as it is, the molecular weight difference in each polymer particle is broadened as compared with conventional block copolymerization and problems due to heterogeneity could be more remarkable.

Many methods for improving the above problems of multiple continuous polymerization have been proposed. For example, in JA-A-48916/83, 11616/80, 69215/83, etc., there is proposed a method in which a slurry produced by a polypropylene polymerization step (polymerization step 1) is classified by a cyclone and the finely divided particles are returned to the polypropylene polymerization step. However, classification based on polymer particle size is not necessarily identical with the residence time distribution and the effect is thus insufficient. In JP-A-195718/82, and 29811/83, there is proposed a method in which a slurry produced by a polypropylene polymerization step (polymerization step 1) is classified by a cyclone and the finely divided particles are returned to the polypropylene polymerization step. However, classification based on polymer particle size is not necessarily identical with the residence time distribution and the effect is thus insufficient. In JP-A-195718/82, and 29811/83, there are also proposed methods in which supply of the catalyst to a polymerizer and withdrawal of the slurry from the polymerizer are effected intermittently and a part of the catalyst going into a polyethylene polymerization step (polymerization step 2) is reduced while the residence time is short. These methods involve the problem that the polymerization is unstable.

In addition, as in embodiment 8 of the present invention described below, there are also proposed methods in which the slurry from the polypropylene polymerization step is treated with an electron donor compound, etc. thereby to selectively inactivate the catalyst particle discharged in a short residence time. For example, in JP-A-145115/82 and 115417/80, various electron donor compounds are proposed but the compounds in the range used in the examples are insufficient to achieve the objects of the present invention as described below.

Based on the results of various investigations to solve the problems noted above, we have proposed the process of Japanese Patent Application No. 283728/85. However, this process is somewhat complicated in that at least four polymerizers are required, there are limitations to a reaction weight ratio and polymerization conditions in each polymerizer, etc.

As a result of various investigations to solve the technical problems described above, it was noted that when two or more polymerizers were connected in series, catalyst and hydrogen were fed only into a first tank and propylene was polymerized, the polymerization mixture in the first tank was sequentially transferred in a polymerizer at a later stage and accompanied thereby, the reaction progress, catalyst concentration and hydrogen concentration at later stages were reduced in order so that polymers having a high molecular weight can be produced and polypropylene having a broad molecular weight distribution could be obtained as a final product. Based on this finding, the process of Japanese Patent Application No. 264593/85 was proposed. In the process described above, however, problems were encountered in that operation and control were complicated because three or more polymerizers were required, and there are limitations to the reaction weight ratio and polymerization conditions in each polymerizer.

It is a first object of the invention to provide an improved continuous process, which makes possible good operability and easy quality control, for producing high molten viscoelastic polypropylene having good formability due to a broad molecular weight distribution.

It has now been found, in accordance with the present invention, that in a process wherein (1) polymerization of propylene as the major component is performed in a first two or more polymerizers (the ethylene content of monomers supplied being 0 to 5 wt.%) and (2) wherein all the catalyst used and hydrogen (molecular weight regulator) are supplied to a first polymeric so that the catalyst and hydrogen (except for that consumed in the process) are transferred in order into the second and subsequent polymerizing, together with the reaction mixture (slurry), the molecular weight of the polymer produced in each polymerizer can be freely controlled on a practical level by continuously withdrawing gas from the gas phase of the second and subsequent polymerizers, without providing any special facilities such as for degasification, etc.

According to the invention, therefore, there is provided a continous process for producing polypropylene by the polymerization of propylene using a Ziegler-Natta catalyst, by slurry or bulk polymrization, in which process:
(i) polymerization is effected in two or more polymerization vessels connected in series so that polypropylen is produced in each polymerization vessel and is continuously discharged from the last polymerization vessel;
(ii) all the catalyst is supplied to the first polymerization vessel, the catalyst being continuously transferred to the second and subsequent (if any) polymerization vessels in order together with the reaction mixture;
(iii) hydrogen is used as a molecular weight regulator and all hydrogen used is supplied to the first polymerization vessel, the hydrogen being continuously transferred to the second and subequent (if any) polymerization vessels in order together with the reaction mixture; and
(iv) gas is removed from the gas phase of at least one of the second and subsequent (if any) polymerization vessels, at a rate of 0.5 to 10 V₁/hr calculated t NTP, the volume of the polymerization vessel being V₁.

In the continuous process described above the ratio of the MFR value of the polymers produced in the first and last polymerization vessels is adjusted to be in the range given by the following equation: 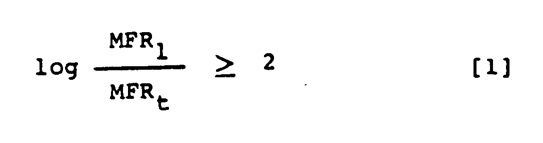
wherein
MFR₁ is the MFR of the polymer produced in the first polymerization vessel, and
MFRₜ is the MFR of the polymer produced in the last polymrization vessel.

The gas withdrawn from the gas phase of at least one of the second ad subsequent polymerization vessel is preferably recycled to the first polymerizer, together with gas recovered from a subsequent degasification tank (for the degasification of the first polymer product).

A small quantity of ethylene and/or an α-olefin may be supplied to at least one of the polymerization vessels, together with propylene.

In the following description reference will be made to the accompanying drawing which is a flow sheet of a polymerization device used in Examples 1 to 6 and Comparative Examples 1 to 4 described below.

The apparatus shown in the drawing basically comprises first and second polymerizers 1 and 2 (each of 200 litres capacity) connected in series via a line containing a pump 4. Downstream of polymerizer 2 there is a degasification tank 3 (of 100 litres capacity) having an offtake line provided with a heat exchanger 5 whence recovered record gas is removed via a compressor 6 and recovered liquid is removed via a further pump 4. Slurry from the bottom of tank 3 is removed for after treatment via a line containing a yet further pump 4.

As catalyst for use in the present invention, a so-called Ziegler Natta catalyst may be sufficient but there is no particular limitation. Preferably, there are used catalysts basically composed of titanium compounds and organic aluminum compounds in combination.

As the titanium compound, there can be advantageously used catalysts generally used for the stereoregular polymerization of propylene such as a titanium trichloride compositions obtained by reducing titanium tetrachloride with hydrogen or metallic aluminium,; compositions obtained by further grinding the titanium trichloride composition with a ball mill, an oscillating mill, thereby to activate the titanium trichloride composition; compositions obtained by further treating the actived composition with an electron donor; titanium trichloride compositions obtained by reducing titanium tetrachloride with an organic aluminium compound followed by various treatments (for example, a titanium trichloride composition obtained by crystal transition with heating in titanium tetrachloride, highly activated titanium trichloride obtained by treating with an electron donating compound or an electron accepting compound); or a so called carrier type catalyst obtained by carrying titanium tetrachloride on a carrier such as magnesium chloride.

As the organic aluminium compound, compounds of the formula: AlRₙR'_{n'}X_{3-(n+n')} can be preferably used. (In the formula, R and R' each represents a hydrocarbon group such as an alkyl group or, an aryl group; X represents a halogen such as fluorine, chloride, bromine and iodine; and, n and n' each represents an optional number shown by: 0<n + n'≧ 3.). Specific examples are trialkyl aluminium or dialkyl aluminium monohalides which can be used singly or in admixture. Further electron donors ordinarily used as a third component of a catalyst can also be used in combination with the titanium compound and organic aluminium compoun described above.

As a mode of polymerization, slurry polymerization using as solvent a hydrocarbon (such as propane, hexane, heptane, octane, benzene or toluene, or bulk polymerization), using propylene as a solvent, can be used.

As the polymerizers used in the process of the present invention, two or more tanks are preferably connected in series. For transfer of the reaction mixture, a part of the liquid phase (slurry) in the polymerizer at the former stage is transferred to a polymerizer in a subsequent stage. The two or more polymerizers must be connected in series.

In the process of the present invention, the catalyst to be used is supplied only in the first tank polymerizer throughout the whole steps described above. Thus, the solid catalyst supplied is passed in order through polymerizers such as the second to third tanks together with the other polymerization reaction mixture, during which the catalyst is withdrawn from the terminal polymerizer in such a state that the solid particles are covered by the polymer formed in each polymerizer thereon.

If a catalyst is freshly supplied in the second and subsequent tanks, polymers having greatly different MFR from the polymer produced in the first tank are produced on the solid particles of the catalyst so that it is difficult to uniformly mix these polymers with each other, even though a graining step after collection of the products; molded articles obtained from these products cause poor appearance of the articles such as fish eye and such is not preferred.

In the process of the present invention, hydrogen is used as the molecular weight regulator. The hydrogen is supplied only in the first tank polymerizer throughout the whole steps described above, like the catalyst described above. The supply to the first tank may be performed in any of the gaseous phase and the liquid phase in the tank.

However, the supply of hydrogen to the second and subsequent tanks from each preceding tank is made in the form of dissolving hydrogen in the polymerization reaction mixture described above, i.e., in a solution state. Accordingly, in the case of supplying hydrogen in the liquid phase (polymerization reaction mixture) of the first tank, care should be taken that undissolved hydrogen which is in a foam state not be transferred to the second tank. If the hydrogen that is incorporated in the liquid phase in the foam state is transferred to a next tank (there is some possibility in the second and subsequent tanks, depending upon state of stirring), a degasified amount becomes larger upon degasification in the second and subsequent tanks than in the case that no foam of hydrogen is present and thus, an efficiency of withdrawal decreases.

Further in the process of the present invention, two or more polymerizers connected in series are used as the polymerizers. Unlike the supply of catalyst and hydrogen described above, propylene and a small quantity of ethylene or α-olefin or solvent can be supplied in the polymerizer in each stage by each definite amount. The small quantity of ethylene or α-olefin can be supplied in at least one of the polymerizers in a weight ratio of 30 wt% or less, preferably 10 wt% or less, more preferably 5 wt% or less, based on propylene, independently or as admixture with propylene. The α-olefin is not limited but mention may be made of butene-1, 2-methylbutene-1 and 4-methylpentene-1, In the second and subsequent polymerizers, the amount of gas to be withdrawn from the gaseous phase of the polymerizers is preferably performed in a range of 0 5 to 10 V₁ per an hour calculated as NTP, namely 0°C and 0 kg/cm²G (101.32s kPa), when the volume of the polymerizer is made V₁. When the amount of gas withdrawn is less than 0.5 V₁, the effect of increasing the molecular weight of the produced polymer is insufficient; conversely when in the case of exceeding 10 V₁, a difference in molecular weight becomes excessively greater than that of the polymer produced in the polymerizer immediately before and fluidity of resin upon formation becomes non-uniform and, there is a danger of causing poor formability, surface roughness, etc., which are not preferred. Further when log MFR₁/MFRₜ is less than 2, broadening of the molecular weight distribution which is the basic object of the first process of the present invention is insufficient.

As described above, the polymerization reaction mixture is sequentially transferred from the first polymerizer to the terminal polymerizer. The polymerization reaction mixture, namely, slurry, withdrawn from the terminal polymerizer is transferred to a pressure drop tank for decreasing the pressure. The gas generated in the pressure drop tank contains large quantities of propylene so that the gas is generally compressed, recycled to the polymerizers and re-used. Further the gas withdrawn from the gaseous phases in the second and subsequent polymerizers are recycled and re-used, together with the gas generated in the pressure drop tank described above. Thus, the process can be performed without loss of raw materials.

In the process of the present invention, a polymerization temperature is not limited but the process can easily be conducted generally in a range of 20 to 100°C, preferably 40 to 80°C. The temperature in each polymerizer may be the same or different.

In the process of the present invention, a polymerization pressure is not limited but is generally under normal pressure to 49 bar G (50 kg/cm²G). The polymerization pressure of each polymerizer in accordance with the process of the present invention which is connected in series may be the same as or different from one another.

In the process of the present invention, a mean residence time of the reaction mixture in each polymerizer connected in series is not limited but the process is carried out generally for 30 minutes to 10 hours.

Furthermore, for transfer of the slurry between the polymerizers connected in series, conventionally used transportation through a pump, transportation utilizing a pressure difference and other methods can be adopted but there is no particular restriction.

The MFR of polypropylene thus obtained in accordance with the process of the present invention is generally 0.01 to 100, For sheet molding and blow molding, polypropylene having the MFR value of 0.05 to 10, preferably 0.10 to 5.0 is used.

Major effects of the process in the present invention described above in detail can be summarized as follows.

In the process of the present invention, there is allowance in conditions for operation of each polymerizer as a definite multiple polymerization and therefore, control in the polymerization processes and control in polymerization conditions can be extremely easily done.

Further in the process of the present invention, polypropylene having a broad molecular weight distribution contemplated in the present invention can be obtained by supplying the catalyst only in the first polymerizer of two or more polymerization tanks connected in series and compound withdrawing gas from the gaseous phase of the second and subsequent polymerizers, without providing any particular degasification tank in the intermediate stage and a slurry transfer pump, or gas recovery device accompanied thereby.

As described above, the present invention can achieve the effects described above which were impossible to achieve in the prior art, by adopting the particular polymerization conditions and by the use of the particular additive (in preferred embodiments).

The present invention will be described in more detail with reference to the examples below but is not deemed to be limited thereto.

Analyse and measurement in the examples were performed as described below.
1) MFR (g/10 minutes) : ASTM D-1238, 230°C, 2.16 kg load
2) Ethylene content (wt%) : infrared absorption spectrum method
3) Polymerization ratio (wt/wt) of polymerization (i) to polymerization (ii) :
   Copolymers having various reaction ratios of ethylene/propylene were previously prepared. Using the copolymers as standard samples, a calibration curve was prepared by the infrared absorption spectrum method. A ratio of ethylene/propylene reacted in polymerization (ii) was determined and the polymerization ratio was calculated from the ethylene content (described above) of the whole copolymers.
4) Calculation of MFR of polymer produced in each polymerizer :
   - MFR₁ :: MFR of the polymer polymerized in the first polymerizer (*1)
   - MFR₂ :: MFR of the polymer polymerized in the second polymerizer (*1)
   - MFR_{1 + 2} :: MFR of the total polymers polymerized in the first and second polymerizers
   - W₁ :: ratio of the total polymers produced in the first polymerizer in the polymerization step (i) (*2)
   - W₂ :: ratio of the total polymers produced in the second polymerizer in the polymerization step (i) (*2)
   - W₁ + W₂ :: 1.0
   - *1 :: Sampling was performed followed by actual measurement.
   - *2 :: The titanium content in the polymers was analyzed and calculated by the X ray fluorometry.
   MFR₂ was determined by the following relationship: 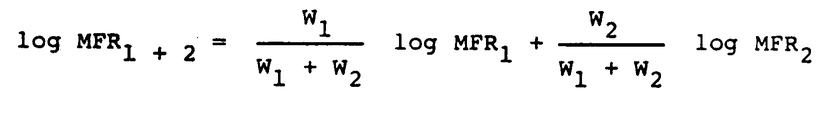
5) Measurement of physical properties of articles sheet molded:
   Young's modulus (kgf/mm²) : ASTMD-882
   Blanking impact strength (kgf/mm²) : ASTMD-781
   Heating behavior : CHISSO's method (described below)
   In order to evaluate heating vacuum properties of a sheet as a model, the sheet was fixed in a frame of 40 cm x 40 cm, which was put in a thermostat at 200°C to measure the following physical properties. Namely, a) a sagging amount (mm) at the initial stage of heating of the sheet, b) the maximum spring back amount (%) : [1/150 x (150 - maximum sagging amount (mm) when recovered x 100)] and c) residence time (second) from the maximum recovery to re-sagging.
6) Appearance of sheet : visual observation

### Example 1

### (1) Preparation of catalyst

Six liters of n-hexane, 5.0 mols of diethyl aluminum monochloride (DEAC) and 12.0 mols of diisoamyl ether were mixed at 25°C for 5 minutes. The mixture was reacted at the same temperature for 5 minutes to give reaction solution (I) (molar ratio of diisoamyl ether/DEAC, 2.4). In a reactor substituted with nitrogen were charged 40 mols of titanium tetrachloride followed by heating to 35°C. The whole amount of the reaction solution (I) described above was dropwise added thereto over 180 minutes. Then, the mixture was kept at the same temperature for 30 minutes. After elevating the temperature to 75°C, the mixture was reacted for further an hour. After cooling to room temperature, the supernatant was removed and 30 liters of n-hexane were added followed by decantation. The operation was repeated 4 times to give 1.9 g of solid product (II).

The whole amount of this (II) was suspended in 30 liters of n-hexane. In this state, 1.6 kg of diisoamyl ether was added to the suspension at 20°C and 3.5 kg of titanium tetrachloride at room temperature in about 5 minutes. The mixture was reacted at 65°C for an hour. After completion of the reaction, the mixture was cooled to room temperature (20°C). After the supernatant was removed by decantation, 30 liters of n-hexane were added and the mixture was stirred for 15 minutes and settled and then the supernatant was removed. After this operation was repeated 5 times, the system was dried under reduced pressure to give solid product (III).

### (2) Preparation of catalyst

In a tank having an inner volume of 50 liters were charged 40 liters of n-hexane, 850 g of diethyl aluminum chloride, 360 g of the solid product described above and 3.8 g of methyl p-toluate. Next, while keeping at 30°C and stirring, propylene gas was supplied in 180 g/H for 2 hours to conduct a preliminary treatment.

### (3) Polymerization

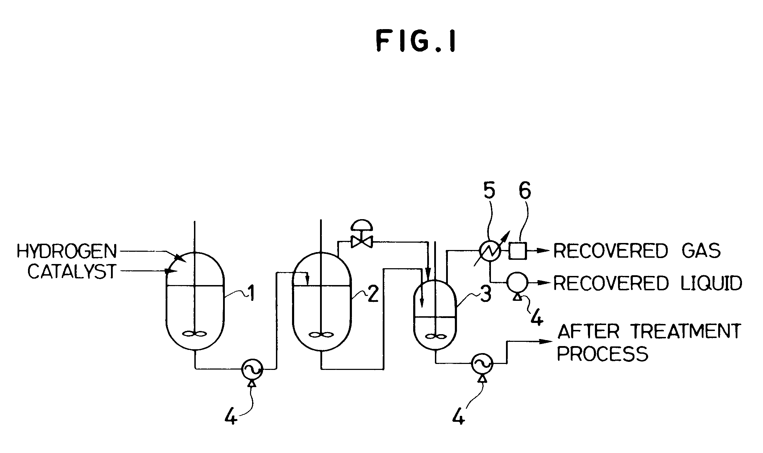

Polymerization was conducted in a polymerization device shown in Figure 1.

In polymerizer (1) were continuously supplied 28ℓ/H of n-hexane and 120 ml/H of a catalyst slurry. Propylene was supplied and controlled in each polymerizer to show temperature of 70°C and pressure of 6 bar G (6kg/cm²G) and of 8 bar G (8kg/cm²G) in polymerizers (1) and (2), respectively.

Further 530Nℓ/H of gas was continuously discharged from polymerizer (2). The solution was withdrawn through a control valve so as to show 80% of solution level in each polymerizer. Gas from a degasification tank was compressed by a compressor and recycled to polymerizer (1). The polymer produced was 5kg/H.

Analytical data are shown in Table 1.

### (4) Graining and sheet molding

To 15kg of the white polymer powders obtained above were added 15g of BHT® (2,6-di-t-butyl-p-cresol), 7.5g of Irganox 1010® (tetrakis[methylene(3,5-di-t-butyl-4-hydrocinnamate)]methane) and 30g of calcium stearate. The mixture was subjected to graining using a granulator of 40 mm0̸. Then, the granulated matters were finished with an extrusion molding machine of 50 mm0̸ at 225°C to prepare a sheet having a width of 60cm and a thickness of 0.4mm. Physical properties of the sheet were evaluated by the methods described above. The results are shown in Table 2.

### Comparative Example 1

The procedures of Example 1 were carried out in a similar manner except that the gas in the gaseous phase was not discharged from polymerizer (2). The sheet was inferior in heating behavior.

### Comparative Example 2

The procedures of Example 1 were carried out in a similar manner except that a hydrogen concentration in the gaseous phase of the polymerizers was made identical by supplying hydrogen to various polymerizers. In this case, the sheet was markedly inferior in heating behavior.

### Examples 2 through 4 and Comparative Examples 3 and 4

The procedures of Example 1 were carried out in a similar manner except that the gaseous phase hydrogen concentration and the amount of gas discharged were changed as shown in the table.

### Example 5

The procedures of Example 1 were carried out in a similar manner except that the polymerization temperature and the gaseous phase hydrogen concentration were changed as shown in the table. Further ethylene gas was continuously supplied in polymerizers (1) and (2), respectively, in 60 g/H. The ethylene content in the polymer obtained was 2.5%.

### Example 6

In Example 1, methyl p-toluate was supplied to polymerizer (1) in 1 g per 1 g of the solid product in the catalyst slurry. Further the amount of the catalyst slurry was changed to 240 ml/H. As shown in the table, the results reveal that Young's modulus was remarkably increased and heating behavior was improved with the catalyst system of the present invention.

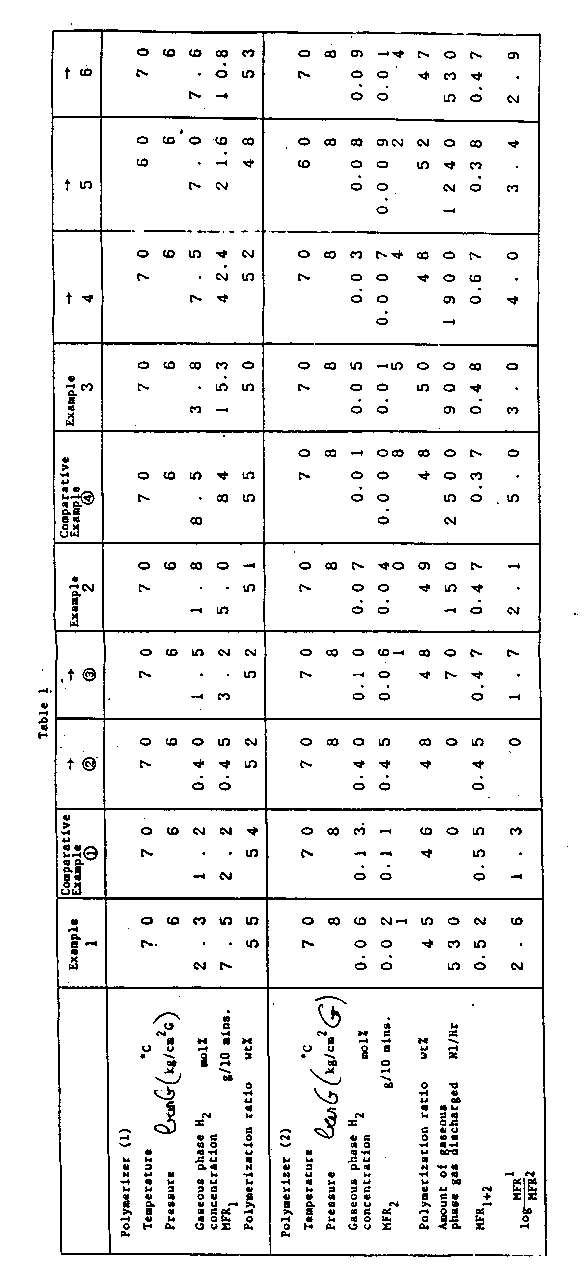

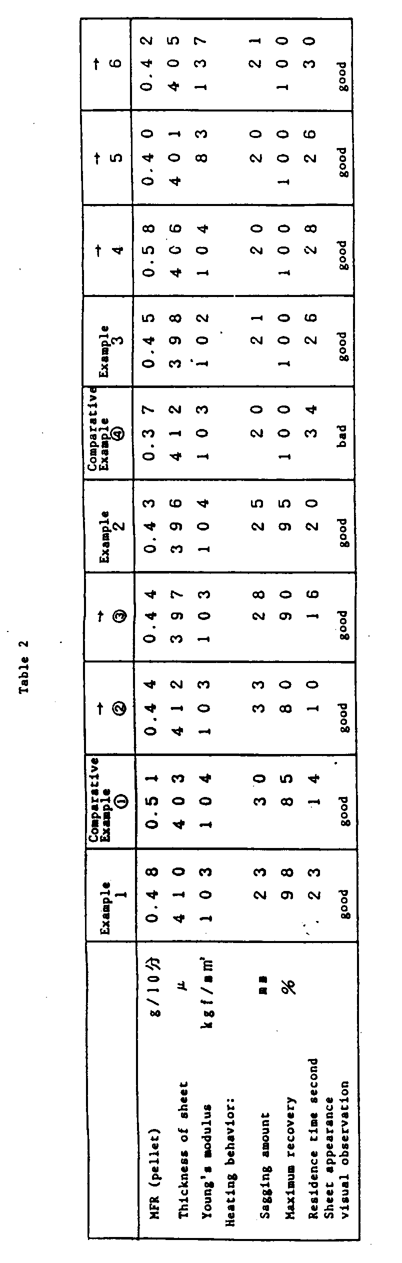

## Claims

1. A continuous process for producing polypropylene by the polymerization of propylene using a Ziegler-Natta catalyst, by slurry or bulk polymerization, in which process:
(i) polymerization is effected in two or more polymerizers connected in series so that polypropylene is produced in each polymerizer and is continuously discharged from the last polymerization vessel;
(ii) all the catalyst is supplied to the first polymerizer, the catalyst being continuously transferred to the second and subsequent (if any) polymerizers together with the reaction mixture;
(iii) hydrogen is used as a molecular weight regulator and all the hydrogen is supplied to the first polymerizer, the hydrogen being continuously transferred to the second and subsequent (if any) polymerizers together with the reaction mixture; and polymerizers together with the reaction mixture;
(iv) gas is removed from the gas phase of at least one of the second and subsequent (if any) polymerizers, at a rate of 0.5 to 10 v₁/hr calculated at NTP (V₁ being the volume of the polymerizer);
the ratio of MFR values of the polymer produced in the first and last polymerizers in at least two polymerizers connected in series being adjusted to be in the range given by the equation: 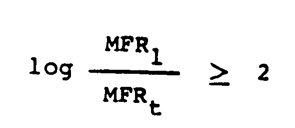 (wherein MFR₁ is the MFR of the polymer produced in the first polymerizer, and MFR is the MFR of the polymer produced in the last polymerizer).

2. A process as claimed in claim 1 in which the gas withdrawn from the gas phase of the second and/or subsequent (if any) polymerizers is recycled to the first polymerizer, together with gas recovered from a subsequent degasification vessel.

3. A process as claimed in claim 1 in which a small amount of ethylene and/or an α-olefin are/is supplied to at least one of the polymerizers, together with propylene.

## Patentansprüche

1. Kontinuierliches Verfahren zur Herstellung von Polypropylen durch Polymerisation von Propylen unter Verwendung eines Ziegler-Natta-Katalysators in einer Aufschlämmungs- oder Massenpolymerisation,
wobei
(i) die Polymerisation in zwei oder mehreren, in Reihen miteinander verbundenen Polymerisationsgefäßen durchgeführt wird, sodaß das Polypropylen, das in jedem der Polymerisationsgefäße hergestellt wird, aus dem letzten Polymerisationskessel kontinuierlich abgegeben wird;
(ii) der gesamte Katalysator in das erste Polymerisationsgefäß gegeben wird, wobei der Katalysator kontinuierlich in das zweite und folgende (wenn vorhanden) Polymerisationsgefäß zusammen mit der Reaktionsmischung überführt wird;
(iii) Wasserstoff als Regulator für das Molekulargewicht verwendet wird, welcher insgesamt dem ersten Polymerisationsgefäß zugeführt wird, wobei der Wasserstoff in das zweite und folgende (wenn vorhanden) Polymerisationsgefäß kontinuierlich zusammen mit der Reaktionsmischung überführt wird;
(iv) Gas aus der Gasphase von zumindest einem von dem zweiten und folgenden (wenn vorhanden) Polymerisationsgefäßen mit einer Geschwindigkeit von 0,5 bis 10 V₁/h, berechnet bei NTP abgezogen wird (V₁ definiert das Volumen des Polymerisationsgefäßes);
wobei das Verhältnis der MFR-Werte des im ersten und letzten Polymerisationsgefäß hergestellten Polymers bei mindestens zwei in Reihen verbundenen Polymerisationsgefäßen so eingestellt ist, daß es in dem Bereich, der durch die Gleichung 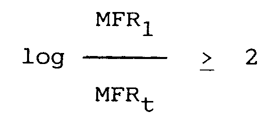 gegeben ist, liegt (wobei MFR₁ der MFR-Wert des im ersten Polymerisationsgefäß hergestellten Polymers und MFRₜ der MFRₜ-Wert des im letzten Polymerisationsgefäß hergestellten Polymers ist).

2. Verfahren nach Anspruch 1, wobei
das Gas, das aus der Gasphase des zweiten und/oder folgenden (wenn vorhanden) Polymerisationsgefäßes abgezogen wird, zum ersten Polymerisationsgefäß zusammen mit dem aus einem nachfolgenden Entgasungskessel erhaltenen Gas zurückgeführt wird.

3. Verfahren nach Anspruch 1, wobei eine kleine Menge Ethylen und/oder ein α-Olefin zumindest einem der Polymerisationsgefäße zusammen mit dem Propylen zugeführt wird.

## Revendications

1. Procédé continu de préparation de polypropylène par la polymérisation de propylène utilisant un catalyseur de Ziegler-Natta, par polymérisation en bloc ou en suspension épaisse, dans lequel procédé:
(i) la polymérisation est effectuée dans deux ou plus de deux réacteurs à polymérisation raccordés en série de telle manière que du polypropylène soit produit dans chacun des réacteurs à polymérisation et déchargé en continu du dernier réacteur à polymérisation,
(ii) tout le catalyseur est introduit dans le premier réacteur à polymérisation, le catalyseur étant transféré en continu ou deuxième réacteur à polymérisation et (s'il en est) aux suivants avec le mélange de réaction;
(iii) de l'hydrogène est utilisé comme régulateur du poids moléculaire et tout l'hydrogène est introduit dans le premier réacteur à polymérisation, l'hydrogène étant transféré en continu au deuxième réacteur à polymérisation et (s'il en est) aux suivants avec le mélange de réaction;
(iv) le gaz est éliminé de la phase gazeuse d'au moins un des deuxième et (s'il en est) réacteurs à polymérisation suivants à une vitesse de 0.5 à 10 V₁/heure calculée pour des conditions normales de température et de pression (V₁ étant le volume du réacteur à polymérisation); le rapport des valeurs de MFR du polymère produit dans le premier et dans le dernier réacteur à polymérisation dans au moins deux réacteurs à polymérisation raccordés en série étant ajusté de manière à se situer dans la plage donnée par l'équation 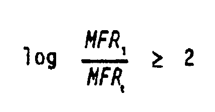 (dans laquelle MFR₁ est la MFR du polymère produit dans le premier réacteur à polymérisation et MFRₜ est la MFR du polymère produit dans le dernier réacteur à polymérisation.

2. Procédé tel que revendiqué dans la revendication 1, dans lequel le gaz est éliminé de la phase gazeuse du deuxième et/ou (s'il en est) des réacteurs à polymérisation suivants est recyclé vers le premier réacteur à polymérisation, en même temps que et avec le gaz récupéré d'un réceptacle de degazéification suivant.

3. Procédé tel que revendiqué dans la revendication 1, dans lequel une petite quantité d'éthylène et/ou d'une α-oléfine est introduite dans au moins un des réacteurs à polymérisation, en même temps que et avec le propylène.
